# EUROPÄISCHE PATENTSCHRIFT

(11) **EP 3 555 572 B1**
(45) Veröffentlichungstag und Bekanntmachung des Hinweises auf die Patenterteilung: **16.02.2022**
(21) Anmeldenummer: 17825167.4
(22) Anmeldetag: 13.12.2017
(51) Int. Cl.: G01D 5/12

(54) **VERFAHREN UND VORRICHTUNG ZUM BESTIMMEN EINER POSITION EINES STELLELEMENTS**
METHOD AND DEVICE FOR DETERMINING A POSITION OOF AN ACTUATING ELEMENT
PROCÉDÉ ET DISPOSITIF POUR DÉTERMINER UNE POSITION D'UN ÉLÉMENT DE RÉGLAGE

(30) Priorität: 19.12.2016 DE 102016225403
(43) Veröffentlichungstag der Anmeldung: 23.10.2019
(73) Patentinhaber: Robert Bosch GmbH, 70442 Stuttgart (DE)
(72) Erfinder: DEPNER, Dieter, 77839 Lichtenau (DE)
(86) Internationale Anmeldenummer: PCT/EP2017/082645
(87) Internationale Veröffentlichungsnummer: WO 2018/114531

(56) Entgegenhaltungen:
- EP-A1- 2 204 891
- WO-A1-2015/136513
- DE-A1-102010 021 186
- DE-A1-102012 209 806
- DE-A1-102014 213 514
- JP-A- 2007 144 580

## Beschreibung

### Technisches Gebiet

Die vorliegende Erfindung betrifft Stellvorrichtungen wie sie beispielsweise für automatische Fensterheber und Dachschließanlagen in einem Kraftfahrzeug verwendet werden.

### Stand der Technik

Automatische Stellvorrichtungen weisen in der Regel ein Stellelement (Fensterscheibe, Schiebedach) auf, das elektrisch durch einen Elektromotor einer Stellvorrichtungen angetrieben wird. Der Elektromotor wird meist von einer Steuereinheit angesteuert, die mit einem Bedienelement gekoppelt ist, um abhängig von einer Betätigung des Bedienelements den Elektromotor anzusteuern und dessen Bewegungsrichtung vorzugeben.

Bei Stellvorrichtungen an einem Kraftfahrzeug, wie beispielsweise elektrischen Fensterhebern, elektrischen Schiebedächern und dergleichen, muss sichergestellt werden, dass sich während eines Schließvorgangs, bei dem das Stellelement in Richtung einer Anschlagskante (Fensterrahmen, Dachausnehmung) bewegt wird, keine Gegenstände oder Körperteile befinden, die beschädigt bzw. verletzt werden können. Um einen solchen Fall zu vermeiden, ist, wenn eine Steuereinheit vorhanden ist, ein Algorithmus implementiert, der einen Einklemmfall während eines Schließvorgangs des Stellelements erkennt. Wird der Einklemmfall erkannt, wird der Schließvorgang unterbrochen bzw. eine Reversierung durchgeführt, bei der das Stellelement zumindest kurzzeitig eine Öffnungsbewegung vollzieht.

Es ist üblich, dass die Anschlagkante, gegen die das Stellelement verfahren wird, mit einer Dichtung versehen ist, so dass sich der Widerstand bei einem Schließvorgang kurz vor dem Auftreffen des Stellelements an der Anschlagkante erhöht. Daher ist insbesondere bei automatischen Fensterhebern eine Funktion vorgesehen, bei der kurz vor dem Erreichen einer vollständigen Schließstellung, bei der das Stellelement in die Dichtung an der Anschlagkante einfährt, die Einklemmschutzfunktion deaktiviert wird. Der Bereich, in dem die Einklemmschutzfunktion deaktiviert wird, ist so schmal gewählt, dass keine realistische Gefahr des Hineingelangens von Gegenständen oder Körperteilen besteht. Durch das Deaktivieren der Einklemmschutzfunktion in diesem Bereich wird vermieden, dass beim Einfahren des Stellelements in die Dichtung fälschlicherweise ein Einklemmfall detektiert wird und als entsprechende Reaktion beispielsweise eine Reversierung, d.h. eine Umkehrung, der Bewegungsrichtung des Stellelements ausgelöst wird.

Für diese Funktion ist es notwendig, dass die Position des Stellelements bekannt ist. Die Position des Stellelements kann im Allgemeinen anhand einer Position eines Läufers des das Stellelement antreibenden Elektromotors bestimmt werden.

Insbesondere bei Fensterhebersystemen in Kraftfahrzeugen wird die Position des Stellelements über eine relative Drehbewegung des Elektromotors der Stellvorrichtung detektiert. Aufgrund der bekannten Kopplungsmechanik zwischen dem Elektromotor und dem Stellelement kann beim definierten Ausgangszustand, wie z.B. eine vollständige Offenstellung oder eine Schließstellung des Stellelements, über Integrieren des mit der Drehbewegung des Elektromotors umgesetztes Weges die Position des Stellelements festgestellt werden. Für die Detektion der relativen Position des Läufers des Elektromotors werden in der Regel Lagesensoren an der Welle des Fensterheberantriebs, wie z.B. Hall-Sensoren, vorgesehen, oder die Rotorlage wird über die Auswertung einer Stromwelligkeit sensorlos ermittelt. Beide Verfahren sind aufwendig, da entweder zusätzliche Komponenten vorgesehen werden müssen oder die elektromagnetische Auslegung verändert werden muss. Dies führt in der Regel zu einem schlechteren Wirkungsgrad oder es muss zudem eine entsprechende Rechenkapazität in einer Motorsteuerung vorgesehen werden.

Es ist daher wünschenswert, eine verbesserte Erfassung der Position eines Stellelements in einem Stellgebersystem, insbesondere einer Fensterscheibe in einem Fensterhebersystem, zur Verfügung zu stellen.

Mit der JP 2007 144 580 A1 ist eine Positionsdetektierung eines linear verstellbaren Zylinders bekannt geworden, dessen Vibrationen mittels eines Beschleunigungssensors erfasst werden.

Die DE 10 2010 021 186 A1 beschreibt ein Verfarhen zur Drehzahlerfassung, bei dem mittels zwei Schwingungsensoren die Drehzahl und die Drehrichtung eines rotierenden Objekts ermittelt werden kann.

### Offenbarung der Erfindung

Diese Aufgabe wird durch das Verfahren zum Bestimmen der Position eines Stellelements eines Stellgebersystems, insbesondere einer Fensterscheibe eines Fensterhebersystems, gemäß Anspruch 1, sowie einer Steuereinheit gemäß Anspruch 4 und einem Stellgebersystem gemäß Anspruch 5 gelöst.

Weitere Ausgestaltungen sind in den abhängigen Ansprüchen angegeben.

Eine Idee des obigen Verfahrens besteht darin, die Position des Stellelements durch Feststellen einer relativen Positionsänderung des Rotors festzustellen, die durch Auswertung einer Vibration oder Schwingung des Stellantriebs ermittelt worden ist. Eine Vibration des Stellantriebs entsteht durch Rastmomente des Rotors bei einer Drehung des Rotors im Magnetkreis. Aufgrund der Lagerung des Rotors im Potopf des Stellantriebs führt dies zu einer radial und tangential zumRotor wirkenden Kraftanregung des Stellantriebs. Zudem können Unwuchten, die sich in einem realen Design eines Antriebsmotors des Stellantriebs nicht vermeiden lassen, ebenfalls zu radialen Kraftanregungen führen. Eine Bewegung des Rotors führt damit zu periodischen Schwingungen, die jeweils eine bestimmte Drehlage des Rotors, und damit eine Positionsänderung des Stellantriebs anzeigen.

Durch die Verwendung eines Vibrations- oder Beschleunigungssensors an dem Stellantrieb kann auf zusätzliche Signalgeber für die Positionsbestimmung, wie beispielsweise Rotorlagegeber basierend auf Hall-Sensoren, und dergleichen verzichtet werden und damit Bauraum und Gewicht eingespart werden. Weiterhin ist das Stellgebersystem auch in der Lage, eine passive Drehbewegung z.B. bei Ausüben von externen Kräften auf das Stellelement zu detektieren, da diese ebenfalls zum Ausbilden der Schwingung des Sensorsignals aufgrund des Wirkens der Rastmomente und/oder der Unwucht des Rotors führen.

Auf die bei der sensorlosen Lageerfassung in der Regel wirkungsgradverschlechternde elektromagnetische Auslegung des Antriebsmotors kann verzichtet werden. Insbesondere durch die mehrachsigen Detektionsrichtungen kann anhand der Beschleunigungsverläufe bzw. Vibrationsverläufe auch die Drehrichtung des Rotors ermittelt werden.

Durch Auswertung des Vibrationssignals mit Hilfe einer Fourier-Analyse können sich Schwingungsfrequenzen ergeben, die bei konstanter Drehzahl Aufschluss über die für den Stellantrieb charakteristischen Bewegungsmuster zeigen. Durch Auswertung einzelner Schwingungen des Vibrationssignals kann nun eine relative Lageänderung jeder Schwingung des Vibrationssignals zugeordnet werden.

Durch Integrieren der Anzahl der Schwingungen des Vibrationssignals abhängig von der Drehrichtung kann die Position des Stellelements bestimmt werden. Auf diese Weise ist es möglich, mit Hilfe eines einfachen Beschleunigungssensors eine Positionserkennung für ein Stellelements zur Verfügung zu stellen. Erfindungsgemäß kann zur Bestimmung der Position des Stellelementes ein Zählerwert angepasst werden, wobei das Anpassen des Zählerwerts ein Inkrementieren und Dekrementieren des Zählerwerts abhängig von einer Drehrichtung umfasst, wobei die Drehrichtung des Stellantriebs durch Auswerten von zwei Sensorsignalen, die Beschleunigungen des Stellantriebs in zwei verschiedene Richtungen repräsentieren; ermittelt wird.

Erfindungsgemäß ist vorgesehen, dass der Beschleunigungssensor mindestens zwei Sensorsignale bereitstellt, die Beschleunigungen in zwei quer zueinander wirkenden radialen Beschleunigungen des Rotorss oder in einer radialen und einer tangential bzw. axial wirkenden Beschleunigung des Rotors des Stellantriebs angeben.

Erfindungsgemäß ist der Signalverlauf bei einer Drehung des Stellantriebs periodisch und weist mehrere Periodizitäten auf, wobei eine Periodizität geringerer Frequenz zum Plausibilisieren des Zählerwerts verwendet wird. Die Periodizität mit geringerer Frequenz kann beispielsweise durch eine Unwucht des Rotors hervorgerufen werden, wohingegen eine Periodizität mit höherer Frequenz durch das Rastmoment der einzelnen Rotorzähne verursacht wird.

Gemäß einem weiteren Aspekt ist eine Steuereinheit zum Bestimmen einer Position eines Stellelements in einem Stellgebersystem vorgesehen, wobei die Steuereinheit ausgebildet ist, um:
- einen Signalverlauf eines Sensorsignals eines Beschleunigungssensors zu empfangen, der an einem elektromotorischen Stellantrieb des Stellgebersystems angebracht ist, um eine Beschleunigung aufgrund einer Kraftanregung durch ein Rastmoment und/oder eine Unwucht eines Rotors des elektromotorischen Stellantriebs zu detektieren;
- den Signalverlauf auszuwerten, um eine abgeschlossene Schwingung zu detektieren;
- die Position des Stellelements abhängig von dem Detektieren der abgeschlossenen Schwingung zu bestimmen.

Gemäß einem weiteren Aspekt ist ein Stellgebersystem vorgesehen, umfassend:
- einen Stellantrieb zum Antreiben eines Stellelements;
- einen mit dem Stellantrieb gekoppelten Beschleunigungssensor zum Bereitstellen eines Sensorsignals, wobei der Beschleunigungssensor (7) an einem elektromotorischen Stellantrieb (5) des Stellgebersystems (1) angebracht ist, um eine Beschleunigung aufgrund einer Kraftanregung durch ein Rastmoment und/oder eine Unwucht eines Rotors des elektromotorischen Stellantriebs zu detektieren; und
- die obige Steuereinheit.

Weiterhin kann der Beschleunigungssensor an einem Poltopf eines als Elektromotor ausgebildeten Stellantriebs angeordnet sein.

Gemäß einer Ausführungsform kann das obige Stellgebersystem Teil eines Schließsystems, insbesondere einer Fensterheberanlage oder Schiebedachsystem, in einem Kraftfahrzeug sein.

### Kurzbeschreibung der Zeichnungen

Ausführungsformen werden nachfolgend anhand der beigefügten Zeichnungen näher erläutert. Es zeigen:
- Figur 1: eine schematische Darstellung eines Fensterhebersystems für ein Kraftfahrzeug;
- Figur 2: ein Flussdiagramm zur Veranschaulichung eines Verfahrens zum Bestimmen einer aktuellen Position eines Schließelements des Fensterhebersystems:

### Beschreibung von Ausführungsformen

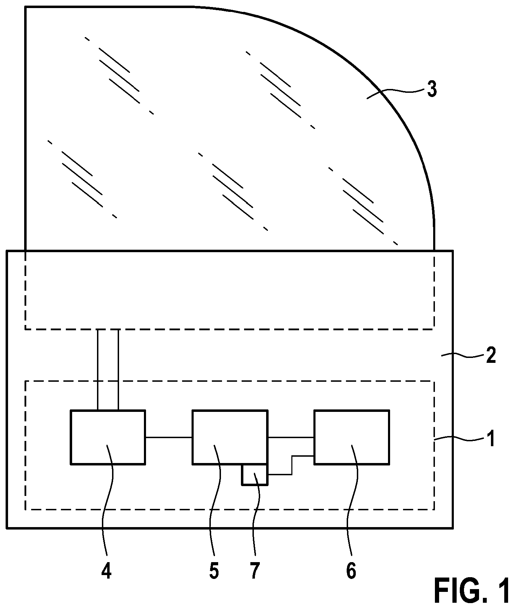

Figur 1 zeigt beispielhaft eine schematische Darstellung eines Stellgebersystems 1 in Form einer Fensterheberanlage in einer Fahrzeugtür 2. Die Fahrzeugtür 2 beinhaltet als Stellelement 3 eine Fensterscheibe, das mithilfe der Fensterheberanlage 1 verfahrbar ist. Dazu ist das Stellelement 3 über eine Mechanik 4 (mechanische Verbindung) mit einem Stellantrieb 5 gekoppelt, so dass bei Betreiben des Stellantriebs 5 das Stellelement 3 nach oben oder nach unten verfahren werden kann.

Der Stellantrieb 5 weist einen Elektromotor auf und wird mithilfe einer Steuereinheit 6 angesteuert, der von extern ein Bediensignal zum Verfahren des Stellelements 3 oder ein Zustandssignal bereitgestellt werden kann. Der Elektromotor kann in an sich bekannter Weise mit einem Innenrotor und einem in einem Poltopf angeordneten Stator - beispielsweise mit Permanentmagnetpolen - vorgesehen sein. Der Elektromotor kann als mechanisch kommutierter Elektromotor ausgebildet sein. Dabei werden einzelne Spulen, die auf Rotorzähnen angeordnet sind, über einen Kommutator bestromt.

Das Zustandssignal kann angeben, ob die Fahrzeugscheibe als Stellelement 2 geöffnet werden soll. Das Bediensignal kann beispielsweise von einem Bedienelement bereitgestellt werden und eine Betätigung eines Bedienelements angeben. Die Steuereinheit 6 kann auch teilweise oder ganz außerhalb der Fahrzeugtür 2 als zentrales Steuerelement (z.B. für mehrere Türen) im Fahrzeug verbaut sein.

Die Steuereinheit 6 ist weiterhin mit einem Beschleunigungssensor 7 an dem Stellantrieb 5 gekoppelt. Der Beschleunigungssensor 7 kann als herkömmlicher mikromechanischer Beschleunigungssensor 7 ausgebildet sein. Zur Detektion einer tangentialen Kraftanregung kann der Beschleunigungssensor 7 mit ausreichendem Abstand von der Drehachse eines Rotors oder als Gyroskop ausgebildet sein oder ein solches umfassen.

Der Beschleunigungssensor 7 kann an dem Stellantrieb 5 angeordnet sein und bei einer Drehung einer Welle des Stellantriebs 5 auftretende radial, tangential und axiale wirkende Kraftanregungen, die sich als Vibrationen darstellen, erfassen. Die Kraftanregungen radial und tangential zur Welle sind periodisch und entstehen aufgrund von Rastmomenten durch Permanentmagnete oder Unwuchten des Rotors. Der Beschleunigungssensor 7 kann insbesondere am Poltopf des Stellantriebs 5 an dessen axialen Enden oder im inneren des Antriebs insbesondere am Bürstenhalter oder einer Sensorplatine angebracht sein.

Der Beschleunigungssensor 7 stellt dazu ein oder mehrere Sensorsignale bereit, die einen Beschleunigungswert repräsentieren. Zur Erkennung der Drehrichtung des Stellantriebs 5 ist es möglich, den Beschleunigungssensor 7 mit mindestens zwei Sensorachsen vorzusehen, die vorzugsweise quer zur axialen Richtung des Rotors ausgerichtet sind, so dass dieser ein erstes Sensorsignal und ein zweites Sensorsignal bereitstellt. Durch die Auswertung des Sensorsignals einer Beschleunigung in axialer Richtung des Rotors kann z.B. die Drehrichtung detektiert werden.

So können die Sensorsignale von der Drehgeschwindigkeit abhängige Periodizitäten aufweisen, die aufgrund der Unwucht der Welle der Drehfrequenz f, d.h. Umdrehungen pro Sekunde (U/sek), und einem Vielfachen der Drehfrequenz von N*f entsprechend der Anzahl N von Nutöffnungen entspricht.

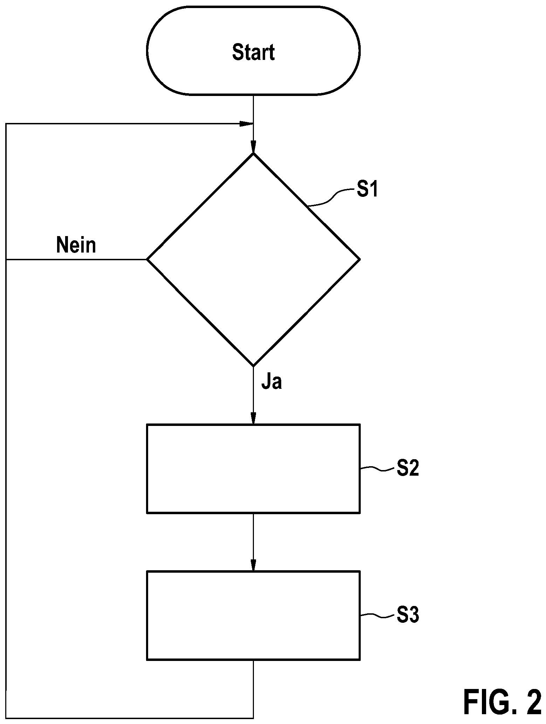

Die Steuereinheit 6 kann anhand der von dem Beschleunigungssensor 7 erfassten Sensorsignale eine Auswertung zur Ermittlung der aktuellen Position des Stellelements 3 durchführen. Dazu führt die Steuereinheit 6 das anhand des Flussdiagramms der Figur 2 veranschaulichte Verfahren aus. Ein entsprechender Algorithmus kann in Form einer Software oder Hardware realisiert sein.

Das Verfahren basiert auf Signalverläufen des ersten und zweiten Sensorsignals des Beschleunigungssensors 7, die zwei senkrecht zueinander verlaufende Beschleunigungen des Stellantriebs 5 permanent erfassen und aufzeichnen. Es liegen daher für die Durchführung des nachfolgend beschriebenen Verfahrens Signalverläufe des ersten Sensorsignals und des zweiten Sensorsignals beispielsweise in zwei radialen Richtungen, insbesondere zwei senkrecht zueinander stehenden radialen Richtungen, oder in einer radialen Richtung und einer tangentialen Richtung vor. Die Signalverläufe sind aufgrund der Drehung des Stellantriebs 3 periodisch.

In Schritt S1 wird überprüft, ob sich die Sensorsignale seit der letzten Erfassung geändert haben. Wird keine Änderung festgestellt (Alternative: Nein), wird davon ausgegangen, dass der Stellantrieb 5 stillsteht und es wird zu Schritt S1 zurückgesprungen. Andernfalls (Alternative: Ja) wird das Verfahren mit Schritt S2 fortgesetzt.

Durch Auswertung der Signalverläufe oder einer Auswertung des nicht periodischen Sensorsignals für die axiale Richtung des Rotors kann zunächst in Schritt S2 die Drehrichtung für jede der Schwingungen, die durch die periodischen Signalverläufe beschrieben ist, ermittelt werden.

Die Drehrichtung kann durch einen Phasenversatz zwischen charakteristischen Punkten der Schwingungen der Signalverläufe der beiden Sensorsignale ermittelt werden. Beispielsweise kann ein Phasenversatz von π/2 eine erste Drehrichtung und von 3/2 π eine zweite Drehrichtung angeben. Die charakteristischen Punkte können durch das lokale Maximum oder das lokale Minimum angegeben sein. Das Erkennen der lokalen Minima oder lokalen Maxima erfolgt mit an sich bekannten Verfahren, insbesondere durch Auffinden eines Nulldurchgangs der ersten Ableitung der Signalverläufe.

In Schritt S3 wird ein Zählerwert abhängig von der erkannten Drehrichtung inkrementiert oder dekrementiert. Der Zählerwert kann ein Zählerwert eines in Hardware der Steuereinheit 6 implementierten Zählers oder eines Softwarezählers sein. So kann der Zählerwert in einer ersten Drehrichtung inkrementiert und in einer zweiten dazu entgegengesetzten Drehrichtung dekrementiert werden. Auf diese Weise kann mit dem Erfassen einer letzten Schwingung ein Zählerwert zur Verfügung gestellt wird, der ausgehend von einer bekannten Position des Stellelements 3 bereitgestellt wird. Bei Erreichen einer bekannten Position des Stellelements 3 (Endanschlag) kann der Zählerwert auf einen Referenzwert zurückgesetzt werden.

Im kontinuierlichen Prozess wird das Verfahren vorzugsweise mit Erkennen einer neuen Schwingung d.h. eines nächsten charakteristischen Punktes des ersten oder des zweiten Sensorsignals im Signalverlauf durchgeführt, wobei für jede neu erkannte Schwingung (abgeschlossene Periode) der Zählerwert entsprechend inkrementiert oder dekrementiert wird.

Die Drehrichtung kann beispielsweise davon abhängen, ob zeitlich nach einem lokalen Maximum des ersten Sensorsignals der Signalverlauf des zweiten Sensorsignals ein Maximum oder ein Minimum aufweist. Weist der Signalverlauf als Nächstes ein Maximum auf, so kann der Zählerwert inkrementiert, anderenfalls dekrementiert werden. Alternativ kann ein weiteres Sensorsignal für z.B. die axiale Kraftanregung genutzt werden, um Drehrichtungen zu erkennen. Dies liegt darin begründet, dass beim Start des Stellvorgangs durch den Getriebeeingriff einer auf der Rotorwelle angeorndeten Schnecke in ein Schnecken-Getrieberad die Rotorwelle eine axiale Beschleunigung entsprechend der Drehrichtung des Rotors erfährt.

Nach Schritt S3 wird das Verfahren mit Schritt S1 fortgesetzt, um eine zyklische Aktualisierung des Zählerwerts zu erreichen.

Der Zählerwert repräsentiert eine aktuelle Position des Stellelements 3, d.h. der Zählerwert kann in eine aktuelle Position des Stellelements 3 durch eine vorgegebene Übertragungsfunktion der mechanischen Kopplung zwischen dem Stellantrieb 5 und dem Stellelement 3 ermittelt werden. Zum Umrechnen des Zählerwerts in die aktuelle Position des Stellelements 3 ist eine Kenntnis über die Anzahl von Rastmomenten pro Umdrehung oder einer vergleichbaren Angabe notwendig, so dass jeder Schwingung ein vorbestimmter Verstellweg des Stellelements 3 zugeordnet werden kann. Das Rastmoment ist durch die Anzahl der Rotorzähne und die Anzahl der Statorpole bestimmt und kann zuvor empierisch ermittelst werden.

Durch Auswertung der Höhe der lokalen Maxima und Minima der Schwingungen kann zudem eine aufgrund einer Unwucht auftretende besonders hohen lokalen Maxima bzw. in besonders niedrigen lokalen Minima eine vollständige Umdrehung des Läufers des Stellantriebs 5 erkannt werden und dadurch eine Plausibilisierung des Zählerwerts vorgenommen werden.

## Patentansprüche

1. Verfahren zum Bestimmen einer Position eines Stellelements (3) in einem Stellgebersystem (1), mit folgenden Schritten:
- Kontinuierliches Erfassen eines Signalverlaufs eines Sensorsignals eines Beschleunigungssensors (7), der an einem elektromotorischen Stellantrieb (5) des Stellgebersystems (1) angebracht ist, um eine Beschleunigung aufgrund einer Kraftanregung durch ein Rastmoment und eine Unwucht eines Rotors mit Rotorzähnen des elektromotorischen Stellantriebs zu detektieren;
- Auswerten des Signalverlaufs, um eine Schwingung zu detektieren;
- Bestimmen der Position des Stellelements (3) abhängig von dem Detektieren der Schwingung,
- wobei abhängig von dem Detektieren der Schwingung ein Zählerwert angepasst wird, wobei das Anpassen des Zählerwerts ein Inkrementieren und Dekrementieren des Zählerwerts abhängig von einer Drehrichtung umfasst, wobei die Drehrichtung des Stellantriebs (3) durch Auswerten von zwei Sensorsignalen, die Beschleunigungen des Stellantriebs in zwei verschiedene Richtungen repräsentieren, ermittelt wird,
- wobei der Signalverlauf bei einer Drehung des elektromotorischen Stellantriebs periodisch ausgebildet ist und mehrere Periodizitäten aufweist, wobei eine Periodizität geringerer Frequenz zum Plausibilisieren des Zählerwerts verwendet wird, und die Periodizität mit geringerer Frequenz einer Unwucht des Rotors zugeordnet wird, mittels der eine vollständige Umdrehung des Rotors erkannt wird, wohingegen jeder Schwingung einer Periodizität mit höherer Frequenz, die durch das Rastmoment der einzelnen Rotorzähne verursacht wird, einem vorbestimmter Verstellweg des Stellelements (3) zugeordnet wird.

2. Verfahren nach Anspruch 1, wobei der Beschleunigungssensor (7) mindestens zwei Sensorsignale bereitstellt, die Beschleunigungen in zwei quer zueinander wirkenden radialen Beschleunigungen des Rotors des Stellantriebs (3) oder in einer radialen und einer tangential wirkenden Beschleunigung des Rotors angeben.

3. Verfahren nach einem der Ansprüche 1 bis 2, wobei ein Signalverlauf eines Sensorsignals eines Beschleunigungssensors (7) für eine Kraftanregung in axialer Richtung des Rotors erfasst wird, wobei abhängig von dem erfassten Signalverlauf für die axiale Richtung eine Drehrichtung des Stellelements (3) bestimmt wird.

4. Steuereinheit (6) zum Bestimmen einer Position eines Stellelements (3) in einem Stellgebersystem (1) mit einem elektromotorischen Stellantrieb (5) der einen Rotor mit Rotorzähnen aufweist, wobei die Steuereinheit ausgebildet ist, um:
- einen Signalverlauf eines Sensorsignals eines Beschleunigungssensors (7) zu empfangen, der an dem elektromotorischen Stellantrieb (5) des Stellgebersystems (1) angebracht ist, um eine Beschleunigung aufgrund einer Kraftanregung durch ein Rastmoment und eine Unwucht des Rotors des elektromotorischen Stellantriebs zu detektieren;
- den Signalverlauf auszuwerten, um eine abgeschlossene Schwingung zu detektieren;
- die Position des Stellelements (3) abhängig von dem Detektieren der abgeschlossenen Schwingung zu bestimmen
- wobei abhängig von dem Detektieren der Schwingung ein Zählerwert angepasst wird, wobei das Anpassen des Zählerwerts ein Inkrementieren und Dekrementieren des Zählerwerts abhängig von einer Drehrichtung umfasst, wobei die Drehrichtung des Stellantriebs (3) durch Auswerten von zwei Sensorsignalen, die Beschleunigungen des Stellantriebs in zwei verschiedene Richtungen repräsentieren, ermittelt wird,
- wobei der Signalverlauf bei einer Drehung des elektromotorischen Stellantriebs periodisch ausgebildet ist und mehrere Periodizitäten aufweist, wobei eine Periodizität geringerer Frequenz zum Plausibilisieren des Zählerwerts verwendet wird, und die Periodizität mit geringerer Frequenz einer Unwucht des Rotors zugeordnet wird, mittels der eine vollständige Umdrehung desRotors erkannt wird, wohingegen jeder Schwingung einer Periodizität mit höherer Frequenz, die durch das Rastmoment der einzelnen Rotorzähne verursacht wird, einem vorbestimmter Verstellweg des Stellelements 3 zugeordnet wird.

5. Stellgebersystem (1), umfassend:
- einen elektromotorischen Stellantrieb (5) mit einem Rotor der Rotorzähne aufweist zum Antreiben eines Stellelements (3);
- einen mit dem Stellantrieb (5) gekoppelten Beschleunigungssensor (7) zum Bereitstellen eines Sensorsignals, wobei der Beschleunigungssensor (7) an dem elektromotorischen Stellantrieb (5) des Stellgebersystems (1) angebracht ist, um eine Beschleunigung aufgrund einer Kraftanregung durch ein Rastmoment und eine Unwucht des Rotors des elektromotorischen Stellantriebs zu detektieren;
- eine Steuereinheit (6) nach Anspruch 4.

6. Stellgebersystem nach Anspruch 5, wobei der Beschleunigungssensor (7) an einem Poltopf eines als Elektromotor ausgebildeten Stellantriebs (5) angeordnet ist.

7. Stellgebersystem nach Anspruch 5 oder 6, wobei das Stellgebersystem Teil eines Schließsystems, insbesondere einer Fensterheberanlage oder Schiebedachsystem, in einem Kraftfahrzeug ist.

## Claims

1. Method for determining a position of an actuating element (3) in a positioning system (1), having the following steps:
- continuously acquiring a signal profile of a sensor signal of an acceleration sensor (7) mounted on an electric-motor actuating drive (5) of the positioning system (1) in order to detect an acceleration on the basis of a force excitation by a cogging torque and an imbalance of a rotor, having rotor teeth, of the electric-motor actuating drive;
- evaluating the signal profile in order to detect an oscillation;
- determining the position of the actuating element (3) on the basis of the detecting of the oscillation,
- wherein the detecting of the oscillation is taken as a basis for adjusting a counter value, wherein the adjusting of the counter value comprises an incrementing and decrementing of the counter value on the basis of a direction of rotation, the direction of rotation of the actuating drive (3) being ascertained by evaluating two sensor signals representing accelerations of the actuating drive in two different directions,
- wherein the signal profile for a rotation of the electric-motor actuating drive is periodic and has multiple periodicities, a periodicity of lower frequency being used for checking the plausibility of the counter value, and the periodicity with lower frequency being assigned to an imbalance of the rotor that is used to identify a complete revolution of the rotor, whereas any oscillation of a periodicity with higher frequency caused by the cogging torque of the individual rotor teeth is assigned to a predetermined adjusting path of the actuating element (3).

2. Method according to Claim 1, wherein the acceleration sensor (7) provides at least two sensor signals that indicate accelerations in two radial accelerations of the rotor of the actuating drive (3) acting at right angles to one another or in one radial and one tangentially acting acceleration of the rotor.

3. Method according to either of Claims 1 and 2, wherein a signal profile of a sensor signal of an acceleration sensor (7) is acquired for a force excitation in the axial direction of the rotor, the acquired signal profile for the axial direction being taken as a basis for determining a direction of rotation of the actuating element (3).

4. Control unit (6) for determining a position of an actuating element (3) in a positioning system (1) having an electric-motor actuating drive (5) that has a rotor with rotor teeth, wherein the control unit is designed to:
- receive a signal profile of a sensor signal of an acceleration sensor (7) mounted on the electric-motor actuating drive (5) of the positioning system (1) in order to detect an acceleration on the basis of a force excitation by a cogging torque and an imbalance of the rotor of the electric-motor actuating drive;
- evaluate the signal profile in order to detect a completed oscillation;
- determine the position of the actuating element (3) on the basis of the detecting of the completed oscillation,
- wherein the detecting of the oscillation is taken as a basis for adjusting a counter value, wherein the adjusting of the counter value comprises an incrementing and decrementing of the counter value on the basis of a direction of rotation, the direction of rotation of the actuating drive (3) being ascertained by evaluating two sensor signals representing accelerations of the actuating drive in two different directions,
- wherein the signal profile for a rotation of the electric-motor actuating drive is periodic and has multiple periodicities, a periodicity of lower frequency being used for checking the plausibility of the counter value, and the periodicity with lower frequency being assigned to an imbalance of the rotor that is used to identify a complete revolution of the rotor, whereas any oscillation of a periodicity with higher frequency caused by the cogging torque of the individual rotor teeth is assigned to a predetermined adjusting path of the actuating element (3).

5. Positioning system (1), comprising:
- an electric-motor actuating drive (5), having a rotor that has rotor teeth, for driving an actuating element (3);
- an acceleration sensor (7), coupled to the actuating drive (5), for providing a sensor signal, wherein the acceleration sensor (7) is mounted on the electric-motor actuating drive (5) of the positioning system (1) in order to detect an acceleration on the basis of a force excitation by a cogging torque and an imbalance of the rotor of the electric-motor actuating drive;
- a control unit (6) according to Claim 4.

6. Positioning system according to Claim 5, wherein the acceleration sensor (7) is arranged on a pole pot of an actuating drive (5) in the form of an electric motor.

7. Positioning system according to Claim 5 or 6, wherein the positioning system is part of a closing system, in particular of a window lifter installation or sliding roof system, in a motor vehicle.

## Revendications

1. Procédé permettant de déterminer une position d'un élément de réglage (3) dans un système de capteur de positionnement (1), comprenant les étapes suivantes consistant à :
- détecter en continu une courbe de signal d'un signal de capteur d'un capteur d'accélération (7) qui est fixé sur un mécanisme de commande à moteur électrique (5) du système de capteur de positionnement (1) afin de détecter une accélération due à une excitation de force par un couple de saillance et un balourd d'un rotor doté de dents de rotor du mécanisme de commande à moteur électrique ;
- évaluer la courbe de signal pour détecter une oscillation ;
- déterminer la position de l'élément de réglage (3) en fonction de la détection de l'oscillation,
- dans lequel, en fonction de la détection de l'oscillation, une valeur de compteur est adaptée, l'adaptation de la valeur de compteur comprenant une incrémentation et une décrémentation de la valeur de compteur en fonction d'un sens de rotation, le sens de rotation du mécanisme de réglage (3) étant établi par l'évaluation de deux signaux de capteur qui représentent des accélérations du mécanisme de réglage dans deux sens différents,
- la courbe de signal lors d'une rotation du mécanisme de commande à moteur électrique étant réalisée périodiquement et présentant plusieurs périodicités, une périodicité de fréquence inférieure étant utilisée pour rendre plausible la valeur de compteur, et la périodicité de fréquence inférieure étant associée à un balourd du rotor au moyen duquel un tour complet du rotor est reconnu, alors qu'à chaque oscillation d'une périodicité de fréquence supérieure qui est occasionnée par le couple de saillance des différentes dents de rotor est associée une course de réglage prédéterminée de l'élément de réglage (3).

2. Procédé selon la revendication 1, dans lequel le capteur d'accélération (7) fournit au moins deux signaux de capteur qui indiquent des accélérations dans deux accélérations radiales, agissant transversalement l'une par rapport à l'autre, du rotor du mécanisme de réglage (3) ou dans une accélération radiale et une accélération à effet tangentiel du rotor.

3. Procédé selon l'une quelconque des revendications 1 et 2, dans lequel une courbe de signal d'un signal de capteur d'un capteur d'accélération (7) est détectée pour une excitation de force dans la direction axiale du rotor, un sens de rotation de l'élément de réglage (3) étant déterminé en fonction de la courbe de signal détectée pour la direction axiale.

4. Unité de commande (6) permettant de déterminer une position d'un élément de réglage (3) dans un système de capteur de positionnement (1) comprenant un mécanisme de commande à moteur électrique (5) qui présente un rotor doté de dents de rotor, l'unité de commande étant réalisée pour :
- recevoir une courbe de signal d'un signal de capteur d'un capteur d'accélération (7) qui est fixé sur le mécanisme de commande à moteur électrique (5) du système de capteur de positionnement (1) afin de détecter une accélération due à une excitation de force par un couple de saillance et un balourd du rotor du mécanisme de commande à moteur électrique ;
- évaluer la courbe de signal afin de détecter une oscillation terminée ;
- déterminer la position de l'élément de réglage (3) en fonction de la détection de l'oscillation terminée,
- en fonction de la détection de l'oscillation, une valeur de compteur étant adaptée, l'adaptation de la valeur de compteur comprenant une incrémentation et une décrémentation de la valeur de compteur en fonction d'un sens de rotation, le sens de rotation du mécanisme de réglage (3) étant établi par l'évaluation de deux signaux de capteur qui représentent des accélérations du mécanisme de réglage dans deux sens différents,
- la courbe de signal lors d'une rotation du mécanisme de commande à moteur électrique étant réalisée périodiquement et présentant plusieurs périodicités, une périodicité de fréquence inférieure étant utilisée pour rendre plausible la valeur de compteur, et la périodicité de fréquence inférieure étant associée à un balourd du rotor au moyen duquel un tour complet du rotor est reconnu, alors qu'à chaque oscillation d'une périodicité de fréquence supérieure qui est occasionnée par le couple de saillance des différentes dents de rotor est associée une course de réglage prédéterminée de l'élément de réglage (3).

5. Système de capteur de positionnement (1), comprenant :
- un mécanisme de commande à moteur électrique (5) comprenant un rotor qui présente des dents de rotor pour entraîner un élément de réglage (3) ;
- un capteur d'accélération (7) couplé avec le mécanisme de réglage (5) pour fournir un signal de capteur, le capteur d'accélération (7) étant fixé sur le mécanisme de réglage à moteur électrique (5) du système de capteur de positionnement (1) afin de détecter une accélération due à une excitation de force par un couple de saillance et un balourd du rotor du mécanisme de commande à moteur électrique ;
- une unité de commande (6) selon la revendication 4.

6. Système de capteur de positionnement selon la revendication 5, dans lequel le capteur d'accélération (7) est disposé au niveau d'un élément polaire cupuliforme d'un mécanisme de réglage (5) réalisé sous la forme d'un moteur électrique.

7. Système de capteur de positionnement selon la revendication 5 ou 6, dans lequel le système de capteur de positionnement fait partie d'un système de fermeture, en particulier d'un système de lève-glace ou d'un système de toit ouvrant, dans un véhicule automobile.
